# EUROPEAN PATENT SPECIFICATION

(11) **EP 3 910 971 B1**
(45) Date of publication and mention of the grant of the patent: **30.07.2025**
(21) Application number: 20174386.1
(22) Date of filing: 13.05.2020
(51) Int. Cl.: H04W 4/44, H04L 67/12

(54) **APPARATUSES AND METHODS FOR WIRELESS V2X COMMUNICATION OF A VEHICLE**
VORRICHTUNGEN UND VERFAHREN ZUR DRAHTLOSEN V2X-KOMMUNIKATION EINES FAHRZEUGS
APPAREILS ET PROCÉDÉS DE COMMUNICATION V2X SANS FIL D'UN VÉHICULE

(43) Date of publication of application: 17.11.2021
(73) Proprietor: VOLKSWAGEN AG, 38440 Wolfsburg (DE)
(72) Inventor: Klören, Sven, 40822 Mettmann (DE)

(56) References cited:
- EP-A1- 2 282 586
- WO-A1-2019/236714
- WO-A1-2019/245301
- US-A1- 2019 110 178
- US-A1- 2019 150 082

## Description

The present disclosure generally relates to apparatuses and methods for wireless Vehicle-to-everything (V2X) communication of a vehicle and, more particularly, to selecting appropriate Radio Access Technologies (RATs) for V2X communication.

Vehicle-to-everything (V2X) refers to the communication of vehicles with any other object (moving or stationary) that affects the vehicle (or its direction of movement). In addition to communication vehicle-to-vehicle (Car2Car, V2V -- Vehicle-to-Vehicle), a vehicle can also communicate with other road users and also with traffic infrastructure (Car2X, V2X - Vehicle-to-X). V2X communications are technologies in vehicular networks to reduce road accidents and enable a high-level of vehicle automation. Examples of V2X communication concepts can be found in EP 3 270 460 A1, US 2017/0287233 A1, CN 105898676 A, US 2019/150082 A1, WO 2019/245301 A1, WO 2019/236714 A1, or US 2019/110178 A1. EP 2 282 586 A1 describes a method and system for multi-RAT (Radio Access Technology) capable wireless devices to dynamically select optimal network connections while roaming. It utilizes a registration history and a preferred network/RAT combination list to evaluate and choose available networks based on predefined preferences and past successes or failures. The system supports updating preferences over-the-air, enabling efficient adaptation to changing network conditions and roaming agreements.

For years, the technology of choice for V2X, on one hand, has been Dedicated Short Range Communication (DSRC), which is based on IEEE 802.11p technology. IEEE 802.11p is an approved amendment to the IEEE 802.11 standard to add wireless access in vehicular environments (WAVE), a vehicular communication system. It defines enhancements to 802.11 (the basis of products marketed as Wi-Fi) required to support Intelligent Transportation Systems (ITS) applications. This includes data exchange between high-speed vehicles and between the vehicles and the roadside infrastructure in the licensed ITS band of 5.9 GHz (5.85-5.925 GHz). IEEE 1609 is a higher layer standard based on IEEE 802.11p. It is also the basis of a European standard for vehicular communication known as ETSI ITS-G5.

On the other hand, Cellular-V2X (C-V2X) technology is seen as a new communication standard supporting V2X services. C-V2X uses 3GPP standardized 4G LTE or 5G mobile cellular connectivity to send and receive signals from a vehicle to other vehicles, pedestrians or to fixed objects such as traffic lights in its surroundings. It commonly uses the 5.9 GHz frequency band to communicate - this being the officially designated ITS frequency in most countries. C-V2X can function without network assistance and has a range that exceeds a mile. In 2014, 3GPP Release 13 spurred studies to test the applicability of the then current standards to V2X. This resulted in the 3GPP Release 14 specifications for C-V2X communications, finalized in 2017.

3GPP Release 15 introduced 5G for V2N use-cases, and 3GPP Release 16 includes work on 5G NR (New Radio) direct communications for V2V/V2I (V2I = Vehicle-to-Infrastructure).

IEEE 802.11p (ITS-G5) and C-V2X are technically mutually exclusive RATs and government authorities of each country or territory may choose one. Currently, some countries are moving towards C-V2X while others move towards IEEE 802.11p.

Vehicle manufacturers already want to offer their customers vehicle functions that are based on V2X- technology, because many functions have already been developed and can be used either using the one or the other V2X communications standard. Therefore, it is the question which V2X communications standard a vehicle manufacturer should bring into its vehicles. Should the vehicle manufacturer use different V2X communication modules in different markets, leading to market differences with a Vehicle type? However, such variant diversity may increase total costs in development, production, logistics and sales.

Therefore, there is a desire for technical solutions avoiding such variant diversity.

This desire is met by apparatuses and methods in accordance with the independent claims. Potentially advantageous embodiments are addressed by the dependent claims.

According to a first aspect, the present disclosure provides an apparatus for wireless V2X communication of a vehicle. The apparatus comprises a first communication module configured to provide V2X communication based on a first RAT. The apparatus also comprises a second communication module configured to provide V2X communication based on a second RAT. A controller is configured to select either the first or the second communication module for V2X communication based on a region/territory the vehicle is operated in. By providing both the first and the second communication module in the vehicle, the V2X communication RAT prevailing in the territory (country) the vehicle is or will be operated in can be selected. Thus, the apparatus for wireless V2X communication can be used flexibly and variant diversity can be reduced.

In some embodiments, the first communication module is configured to provide WLAN-based (WLAN = Wireless Local Area Network) V2X communication while the second communication module is configured to provide cellular-based V2X communication, C-V2X. More particularly, the first communication module may be configured to provide V2X communication based on past, current or future versions of IEEE 802.11p, while the second communication module may be configured to provide C-V2X communication based on past, current or future cellular communication systems, such as 4G (LTE) or 5G. The skilled person having benefit from the present disclosure will appreciate that these embodiments can cover the presently discussed V2X communications standards. The disclosed concept is, however, also applicable to any future RAT that might come into play for V2X communications.

The first and second communication modules may be implemented as respective hardware circuits or as respective software modules. Thus, in one example implementation, the first communication module is a first software-defined radio module and the second communication module is a second software-defined radio module. Software-defined radio (SDR) is a radio communication system where components that have been traditionally implemented in hardware (e.g. mixers, filters, amplifiers, modulators/demodulators, detectors, etc.) are instead implemented by means of software on a personal computer or embedded system. Here, the controller may select either the first or the second software-defined radio module to be loaded to a programmable hardware device. Hence, only one programmable hardware device may be used and adapted by software to V2X communication RAT prevailing in the region/territory (country) the vehicle is operated in.

In other example implementations, the first communication module may be a first hardware-defined radio module and the second communication module may be a second hardware-defined radio module. Here, two physically different hardware modules with respective RF components (e.g. mixers, filters, amplifiers, modulators/demodulators, detectors, etc.) implemented in hardware may be provided. Thus, the need for additional memory for different software modules may be reduced.

In some embodiments, the controller is configured to select either the first or the second communication module for V2X communication based on static control information indicating the territory the vehicle is operated in. Here, static control information refers to a hard-coded choice of V2X technology. For this purpose, the apparatus for wireless V2X communication may comprise a programmable memory and the controller may be configured to select the first or the second communication module based on a predefined parameter stored in the programmable memory, the parameter indicating whether to select the first or the second communication module. For example, the predefined parameter may include coding and adjustment values which can be written to vehicle control units at the end of production (so-called end-of-line, EOL, programming). For example, the predefined parameter may comprise a stored country code, wherein the country code determines usage of either the first or the second communication module for V2X communication. If needed, the predefined parameter may be changed (reprogrammed) via vehicle diagnostics interfaces, for example.

In some embodiments, the controller is configured to select either the first or the second communication module for V2X communication based on dynamic control information indicating the territory the vehicle is operated in. Here, dynamic control information refers to control information which is not hard coded into one or more control units but soft control information based on user interaction (e.g., a user's choice), the vehicle's current position, or a currently detected V2X communications standard.

In some embodiments, the controller may be configured to select the first or the second communication module based on a selected user language for operating the vehicle. The selected user language may then hint to the region/territory (country) the vehicle is operated in. In return, the appropriate V2X communication module may be selected.

In some embodiments, the controller may be configured to select the first or the second communication module based on the vehicle's current location. The location may then be mapped to the appropriate V2X-RAT in use at the location. For example, the location may be determined via global navigation satellite systems (GNSS) that provide geolocation and time information to an electronic receiver installed in the vehicle. Examples of global navigation satellite systems are the Global Positioning System (GPS), GLObal NAvigation Satellite System (GLONASS), Galileo, or BeiDou. Additionally or alternatively, the vehicle's current location may be determined based on cell identifiers (cell-IDs) of a cellular communication system. With Cell-ID the position can be determined via the radio cell (Cell-ID). The cell in which the vehicle is registered may be decisive. This procedure is also known as Cell of Origin (CoO) or Cell Global Identity (CGI). The Cell-ID can then hint to the territory (country) the vehicle is operated in and may be mapped to the appropriate V2X-RAT in use in that territory (country).

In some embodiments, the controller is configured to alternately activate the first and the second communication module and to select that communication module for V2X communication which detects valid incoming messages. In a territory relying on the first RAT for V2X communication, the first communication module would detect valid messages. Likewise, in a territory relying on the second RAT for V2X communication, the second communication module would detect valid messages and thus be selected. This option may reliably select the appropriate communication module for the territory (country) the vehicle is currently operated in without any further territory-to-RAT mapping tables.

According to a further aspect, the present disclosure also proposes a vehicle (car) comprising the apparatus for wireless V2X communication of any one of the previous embodiments.

According to yet a further aspect, the present disclosure proposes a method for wireless V2X communication of a vehicle. The method includes providing a first communication module configured for V2X communication based on a first RAT, providing a second communication module configured for V2X communication based on a second RAT, and selecting either the first or the second communication module for V2X communication based on a territory the vehicle is operated in.

In some embodiments, the method includes programming, via a vehicle's diagnostics interface, static control information in a parameter field of a programmable control unit and selecting either the first or the second communication module for V2X communication based on the static control information. The static control information may be a country code, for example, indicating the territory the vehicle is (to be) operated in.

In some embodiments, the method includes determining a language selected by a user of the vehicle for operating the vehicle and selecting either the first or the second communication module for V2X communication based on the selected language. For example, a driver can select his language via settings on a human-machine interface in the vehicle. If the language is assigned to one of the possible V2X RATs, the vehicle can switch to the assigned V2X RAT.

In some embodiments, the method includes determining the vehicle's current location based on a satellite-based positioning system or based on cell identifiers of a cellular communication system, and selecting either the first or the second communication module for V2X communication based on the vehicle's current location. The vehicle can use its GNSS system (GPS, Galileo, GLONASS, Beidou, etc.) to determine its position. It does not have to be very accurate, but can identify the region in which the vehicle is located, so that a system can know via a database prepared in advance (in the vehicle or in the cloud) which of the V2X technologies is to be used here. This system should be able to use one or the other V2X-module or deactivate both if neither of the two built-in standards is allowed.

In some embodiments, the method includes alternately activating the first and the second communication module and selecting that communication module for V2X communication which has detected valid incoming messages during its activation. The vehicle could subsequently activate each one of the V2X modules and listen to incoming messages. Other vehicles or infrastructure with V2X capability would most likely send large amounts of messages using the V2X technology allowed in the region due to the broadcast nature of the V2X standards. Thus, many messages would arrive at the vehicle. Based on the frequency of the messages, the vehicle can then decide which V2X module to use and then activate it.

Some examples of apparatuses and/or methods will be described in the following by way of example only, and with reference to the accompanying figures, in which
- Fig. 1: shows a schematic block diagram of an apparatus for wireless V2X communication in accordance with the present disclosure;
- Fig. 2: shows a first embodiment of an apparatus for wireless V2X communication;
- Fig. 3: shows a second embodiment of an apparatus for wireless V2X communication;
- Fig. 4: shows a third embodiment of an apparatus for wireless V2X communication;
- Fig. 5: shows a fourth embodiment of an apparatus for wireless V2X communication; and
- Fig. 6: illustrates a method for wireless V2X communication in accordance with the present disclosure.

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

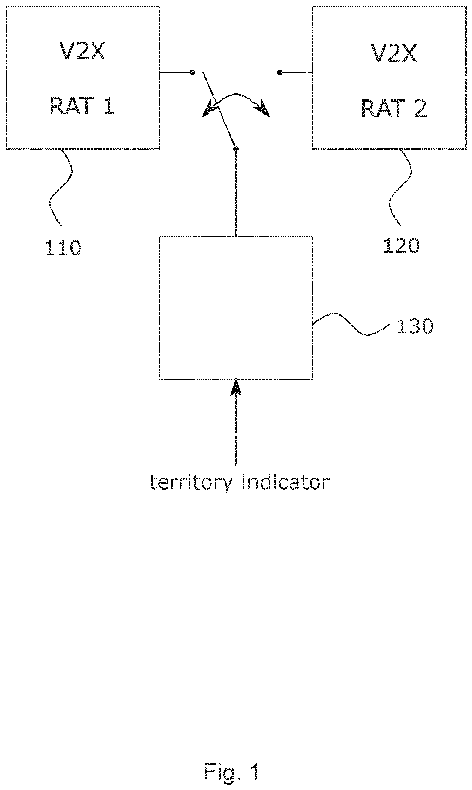

**Fig. 1** shows a schematic block diagram of an apparatus 100 for wireless V2X communication of the vehicle.

Apparatus 100 comprises a first wireless communication module 110 which is configured to provide V2X communication based on a first V2X radio access technology (RAT). According to embodiments, the first V2X RAT can be based on IEEE 802.11. More specifically, first V2X RAT can be based on IEEE802.11p technology. Apparatus 100 further comprises a second wireless communication module 120 which is configured to provide V2X communication based on a second V2X RAT. The second V2X RAT can be based on C-V2X using 3GPP standardized 4G LTE or 5G mobile cellular connectivity to send and receive signals from the vehicle to other vehicles, pedestrians or to fixed objects such as traffic lights in its surroundings. Apparatus 100 further comprises a control module (switch) 130 which is configured to select either the first or the second V2X communication module 110, 120 for V2X communication based on a region/territory the vehicle is operated in or an indicator thereof.

That is to say, in embodiments the first and the second V2X communication modules are not operated in parallel (concurrently). Either the first or the second V2X communication module 110, 120 is selected for V2X communication dependent on the territory/region/country the vehicle is operated or supposed to be operated in.

All or some of the modules 110, 120, 130 may be software-defined modules or hardware-defined modules. In case of software-defined modules, software can be loaded on a programmable general-purpose hardware device depending on the region/territory the vehicle is operated in or an indicator thereof. In case of hardware-defined modules, dedicated electronic circuitry is provided, respectively.

The region/territory the vehicle is operated in or meant to be operated in can be determined in various ways. In some embodiments, the region/territory or an indicator thereof can be hardcoded into one or more control units of the vehicle. In other embodiments, the region/territory can be dynamically determined based on user inputs or measurements.

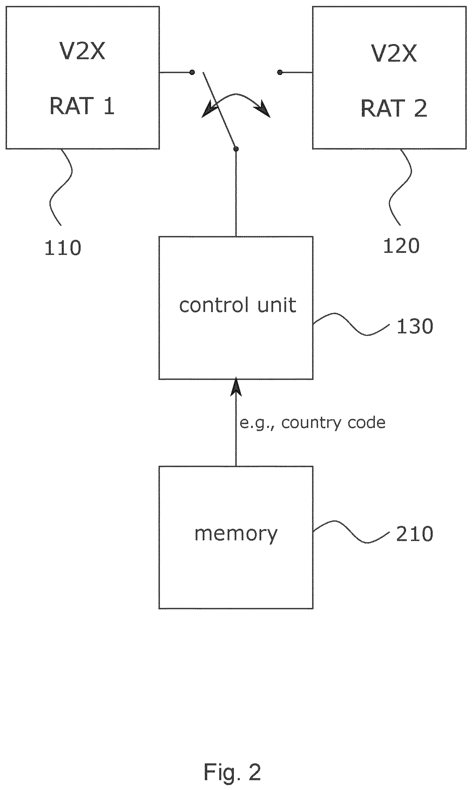

**Fig. 2** shows a block diagram of an apparatus 200 for wireless V2X communication in which region/territory information is hardcoded as static control information for the control module 130.

For that purpose, the apparatus 200 may comprise a programmable memory 210 for permanently storing the region/territory information. The programmable memory 210 may be implemented within a (transceiver) control unit of the vehicle, for example. In some embodiments, the programmable memory 210 may be programmed during or after production or it might be programmed or reprogrammed at a later stage by a car dealer, for example. For programming the region information into the programmable memory 210, conventional vehicle's diagnostics interfaces may be used. The hardcoded region/territory information stored in memory 210 may be provided to the control module 130 which may be configured to select the first or the second V2X communication module 110, 120 based on the hardcoded region/territory information stored in the memory 210. For example, the control module 130 may be configured to map the stored region/territory information to the V2X RAT used in that region and select the appropriate V2X communication module. For example, a lookup table may be used for this mapping.

If the region/territory the vehicle is operated in changes, the region/territory information (country code) in the programmable memory 210 may have to be updated. For example, if the car is sold from an owner in country X to a new owner in country Y, country Y may have a different underlying V2X communication standard compared to country X. In order to ensure appropriate V2X communication, the respective region or country code in programmable memory 210 may be reprogrammed via the vehicle's diagnostics interface.

In markets, for example, parameterization can be carried out by country coding via OBD (= "On-board diagnostics") tools. For example, coding and adjustment values can usually be written initially at the end of production (so-called end of line) via data set writing or parametrization into the vehicle to each control unit. Here a dependency in the transceiver controller can be introduced in such a way that the country code is assigned to one of two V2X technologies, so that it is then used until possibly a new parameterization is carried out (e.g. when reimport/export to another country/market). Alternatively, the technology selection could also be managed via a separate parameter, so that an importer/dealer can select one or the other V2X technology independently of a country code when setting the parameters.

In addition to or as an alternative to the static control information described above, some embodiments may also support dynamic control information. Thus, the control module 130 may be configured to select either the first or the second V2X communication module 110, 120 for V2X communication based on dynamic control information which is indicative of the region/territory the vehicle is currently operated in. The dynamic control information may be based on user interaction via human machine interfaces (HMIs) or measurements.

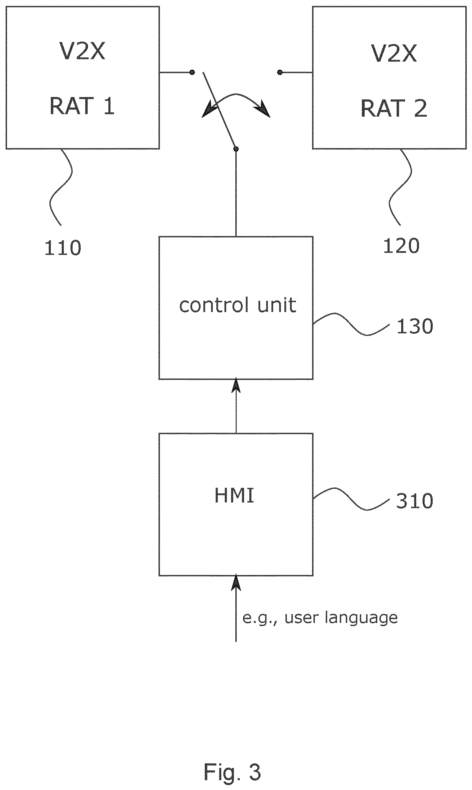

In the embodiment of apparatus 300 shown in **Fig. 3****,** the control module 130 is coupled to a human machine interface (HMI) 310. The HMI 310 can be used by a user of the vehicle to select the first or the second V2X communication module 110, 120 directly or indirectly. For example, if the user uses the human machine interface 310 for directly selecting one of the V2X communication modules 110, 120, the user should be aware of the region/territory the vehicle is currently operated in. In most cases, however, the user will not have this knowledge related to the needed V2X communication technology. Therefore, the HMI 310 may also be used for indirect selection of one of the V2X communication modules 110, 120. For example, the user can select a user language for interacting with the vehicle. The selected user language can then be used as an indicator for the region/territory the vehicle is operated in. For example, if the user selects German as user language, this can be used as an indicator that the vehicle is currently operated in Germany, Austria, or Switzerland. Likewise, English as user language can indicate that the vehicle is currently operated in the UK, Australia, or in the US, for example. This indirect regional information via the user language can then again be used by control module 130 to select the appropriate V2X communication module 110, 120 for the vehicle.

Thus, in the embodiment of Fig. 3, the driver can select his language via settings on the HMI 310 in the vehicle. If the language has been previously assigned to one of the two V2X technologies, the vehicle may switch from one V2X technology to the other on its own. For example, the German-speaking user's vehicle could automatically activate the IEEE 802.11p module 110, and the Chinese-speaking user's vehicle could activate the C-V2X module 120.

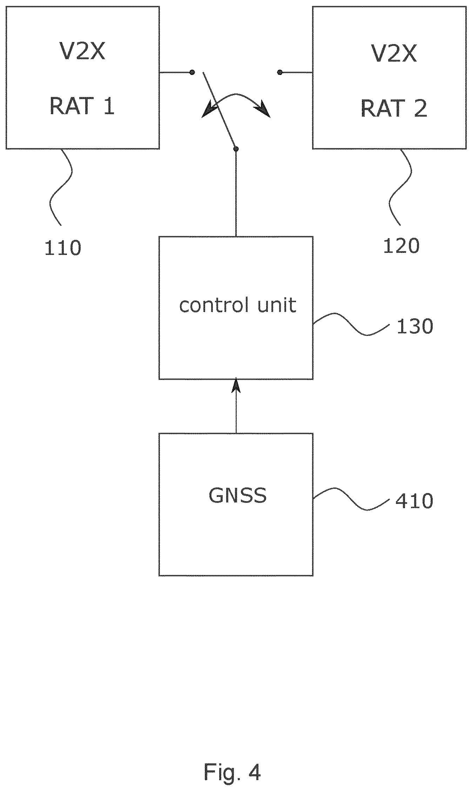

An alternative or additional option for obtaining dynamic control information indicative of the region/territory the vehicle is operated in this shown in **Fig. 4****.**

In the embodiment of Fig. 4, the control module 130 is coupled to a global navigation satellite systems (GNSS) 410 of the vehicle. The GNSS 410 can provide information on the vehicle's current position/location. This measured position may be mapped to the region/territory (e.g., country) the vehicle is currently located in. Based on this region/territory the control module 130 can again select the V2X communication module 110, 120 which is appropriate for the determined region/territory.

The vehicle can thus determine its position using its GNSS system (GPS, Galileo, GLONASS, Beidou, etc.). The position does not have to be very accurate, but it can detect in which region the vehicle is located, so that a system can know via a predefined database (e.g., in the vehicle or in the cloud) which of the two V2X technologies is to be used here. This system should activate one or the other V2X module or deactivate both if neither of the two built-in standards is allowed.

The embodiment of Fig. 4 may be fully transparent to the user. That is to say, the dynamic selection of V2X communication module 110, 120 may take place in the background and may not involve the user's interaction at all. The embodiment of Fig. 4 even allows switching V2X communication modules in case the vehicle crosses a border between two countries which use different V2X communications standards.

In addition to or as an alternative to GNSS 410, the vehicle's current position may also be determined based on positioning techniques used in cellular communication systems. In a cellular communication system, each cell has associated therewith a cell-ID to identify the cell to which a mobile communication device is currently assigned. Since the geographic location of the identified cell (base station) is known, at least a coarse determination of the vehicle's current location can be accomplished. Thus, a mobile radio module and its SIM card (or eSIM) can be used for approximate but sufficient positioning, e.g. if no GNSS module is installed. For example, this could be done via the SIM profile, the country code (MCC) and/or the network code (MNC). This cellular-based localization can be used alternatively or to supplement the GNSS-based localization described above. The skilled person having benefit from the present disclosure will appreciate that V2X communication module selection based on cell identifiers may also be fully transparent to the user.

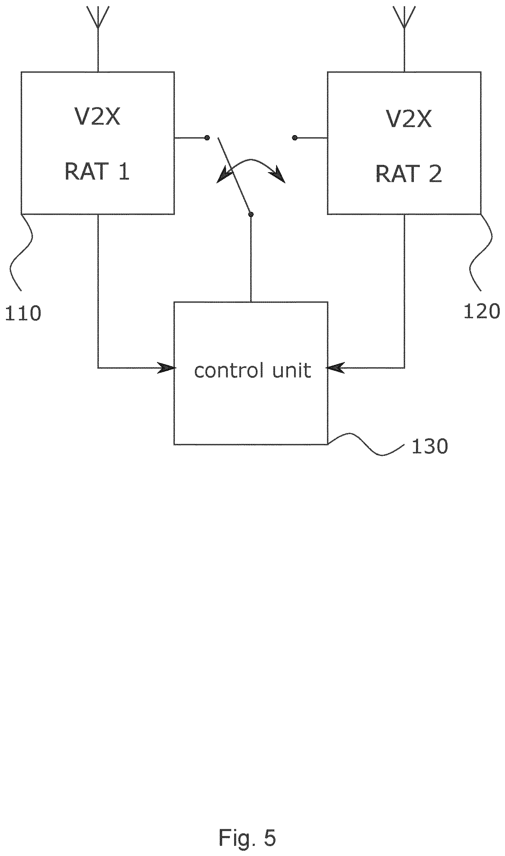

A further option where the controller 130 dynamically controls the selection of the first or the second V2X communication module 110, 120 is shown in **Fig. 5****.**

In the embodiment of Fig. 5, the control module 130 may be configured to alternately activate the first and the second V2X communication module 110, 120 and to select that communication module for V2X communication which detects valid incoming V2X messages from its surrounding. For example, the control module 130 may receive inputs from each of the V2X communication modules 110, 120. The inputs from the V2X communication modules 110, 120 may indicate whether one or the other V2X communication module 110, 120 decodes valid V2X messages. The V2X communication module 110, 120 indicating that it receives valid V2X messages at the vehicle's current location may be selected for V2X communication by controller 130. For this purpose, the first V2X communication module 110 and the second V2X communication module 120 may be activated subsequently in order to listen to their prevailing V2X environment at the vehicle's current location. Depending on whether the first V2X RAT or the second V2X RAT prevails, either the first or the second V2X communication module will indicate the decoding of valid messages.

The vehicle could thus briefly activate one of the two V2X modules 110, 120 in succession and "listen" to incoming messages. Other vehicles or infrastructure with V2X capability would, due to the broadcast nature of the V2X standards, most likely send large volumes of messages using the V2X technology allowed in that region. Therefore, many messages would arrive at the vehicle. Based on the frequency of the messages, the vehicle could then make a decision about the V2X module to be used by the user and then activate it. The vehicle (control module 130) may optionally activate the other V2X module from time to time at certain intervals in order to switch off the V2X module with lower reception if necessary (e.g. if the frequency of valid messages changes to another V2X technology).

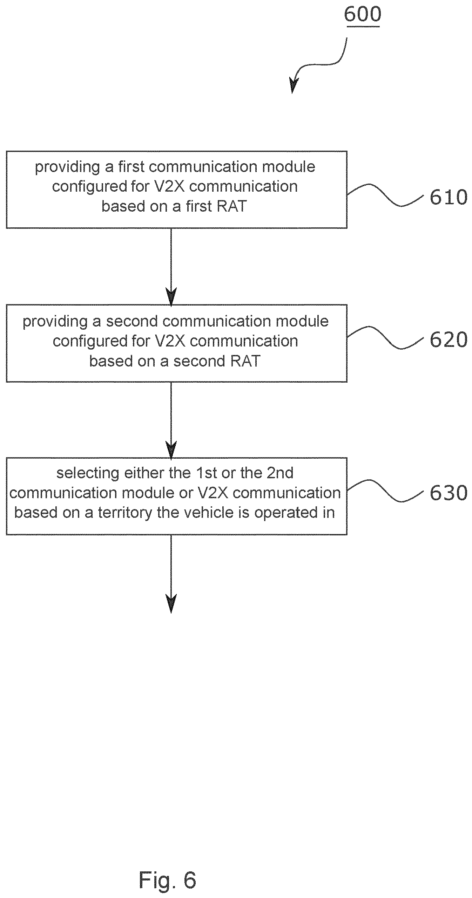

**Fig. 6** summarizes the proposed concept by showing a method 600 for wireless V2X communication of a vehicle in accordance with embodiments of the present disclosure.

Method 600 includes an act 610 of providing a first communication module 110 configured for V2X communication based on a first RAT. Method 600 further includes an act 620 of providing a second communication module 120 configured for V2X communication based on a second RAT. In act 630, either the first communication module 110 or the second communication module 120 for V2X communication is selected based on information indicative of a territory the vehicle is operated in. As has been described above, the information of the territory can come in various static or dynamic flavors.

The concept proposed herein allows the vehicle to be flexibly operated with respective V2X communication throughout the whole world without prior knowledge during production in which region the vehicle will be operated in. This information can be provided by end of line programming or via

Dynamic switching between V2X communication modules may be interesting for reasons of flexibility and to enable customers to continue using the V2X system and the functions based on it even if they organize the transfer of their vehicles to other markets themselves, especially if they simply change borders within a continent, without reprogramming via an on-board diagnosis system.

In the low-cost vehicle segment, however, fixed switching via On-Board-Diagnosis-System may be preferable, as this type of vehicle is typically imported to other continents by importers rather than customers. Importers/distributors have the possibility and expertise to make changes via on-board diagnostic systems. In order to keep the production costs of these vehicles low, the dynamic module can be saved.

Alternatively, for vehicles in the low-cost segment, the transceiver module may be designed to have an exchangeable V2X module so that the importer/dealer can exchange a small piece of hardware instead of changing the parameterization via on-board diagnostics. This would reduce the production costs to the extent that two V2X modules would not have to be installed in parallel in the transceiver module.

The skilled person having benefit from the present disclosure will appreciate that various options described herein can be used standalone or in combination with each other.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

### List of reference signs

- 100: apparatus for wireless V2X communication
- 110: first V2X communication module using first RAT
- 120: second V2X communication module using second RAT
- 130: control module
- 210: programmable memory
- 310: human-machine-interface
- 410: global navigation satellite system, GNSS
- 600: method for wireless V2X communication of a vehicle
- 610: providing a first V2X communication module based on a first RAT
- 620: providing a second V2X communication module based on a second RAT
- 630: selecting either the first or the second V2X communication module based on a territory the vehicle is operated in

## Claims

1. An apparatus (100) for wireless Vehicle-to-everything, V2X, communication of a vehicle, the apparatus comprising
a first V2X communication module (110) configured to provide V2X communication based on a first Radio Access Technology, RAT;
a second V2X communication module (120) configured to provide V2X communication based on a second RAT; and
a controller (130) configured to select either the first or the second V2X communication module for V2X communication based on a determined country the vehicle is operated in

2. The apparatus (100) of claim 1, wherein the first V2X communication module is configured to
provide WLAN-based V2X communication, and wherein the second V2X communication
module is configured to provide cellular-based V2X communication.

3. The apparatus (100) of claim 1 or 2, wherein the first V2X communication module (110) is a
first software-defined radio module and the second V2X communication module (120) is a second software-defined radio module.

4. The apparatus (100) of claim 1 or 2, wherein the first V2X communication module (110) is a
first hardware-defined radio module and the second V2X communication module (120) is a second hardware-defined radio module.

5. The apparatus (100) of any one of the previous claims, wherein controller (130) is configured to select either the first or the second V2X communication module for V2X communication based on static control information indicating the country the vehicle is operated in.

6. The apparatus (100) of any one of the previous claims, further comprising programmable memory (210),
wherein the controller (130) is configured to select the first or the second V2X communication module based on a predefined parameter stored in the programmable memory, the parameter indicating whether to select the first or the second V2X communication module.

7. The apparatus (100) of claim 6, wherein the predefined parameter comprises a country code, wherein the country code determines usage of either the first or the second V2X communication module for V2X communication.

8. The apparatus (100) of any one of the previous claims, wherein the controller (130) is configured to select either the first or the second V2X communication module for V2X communication based on dynamic control information indicating the country the vehicle is operated in.

9. The apparatus (100) of claim 8, wherein the controller (130) is configured to select the first or the second V2X communication module based on a selected user language for operating the vehicle.

10. The apparatus (100) of any one of claims 8 or 9, wherein the controller (130) is configured to select the first or the second V2X communication module based on the vehicle's current location.

11. The apparatus (100) of claim 10, wherein the vehicle's current location is determined based on a satellite-based positioning system (410) or based on cell identifiers of a cellular communication system.

12. The apparatus (100) of any one of the previous claims, wherein the controller (130) is configured to alternately activate the first and the second V2X communication module and to select that V2X communication module for V2X communication which detects valid incoming messages.

13. The apparatus (100) of any one of the previous claims, wherein the first V2X communication module (110) is configured to provide V2X communication based on IEEE 802.11p, and wherein the second V2X communication module (120) is configured to provide V2X communication based on a 4G or 5G cellular communication system.

14. A vehicle comprising the apparatus (100) for wireless V2X communication of any one of the previous claims.

15. A method (600) for wireless V2X communication of a vehicle, the method comprising
providing (610) a first V2X communication module configured for V2X communication based on a first RAT;
providing (620) a second V2X communication module configured for V2X communication based on a second RAT; and
selecting (630) either the first or the second V2X communication module for V2X communication based on a determined country the vehicle is operated in.

## Patentansprüche

1. Vorrichtung (100) für eine drahtlose Vehicle-to-Everything-Kommunikation, V2X-Kommunikation, eines Fahrzeugs, die Vorrichtung umfassend ein erstes V2X-Kommunikationsmodul (110), das konfiguriert ist, um V2X-Kommunikation basierend auf einer ersten Funkzugangstechnologie, RAT, bereitzustellen;
ein zweites V2X-Kommunikationsmodul (120), das konfiguriert ist, um V2X-Kommunikation basierend auf einer zweiten RAT bereitzustellen; und
eine Steuerung (130), die konfiguriert ist, um basierend auf einem bestimmten Land, in dem das Fahrzeug betrieben wird, entweder das erste oder das zweite V2X-Kommunikationsmodul für die V2X-Kommunikation auszuwählen.

2. Vorrichtung (100) nach Anspruch 1, wobei das erste V2X-Kommunikationsmodul konfiguriert ist, um eine WLAN-basierte V2X-Kommunikation bereitzustellen, und wobei das zweite V2X-Kommunikationsmodul konfiguriert ist, um eine zellularbasierte V2X-Kommunikation bereitzustellen.

3. Vorrichtung (100) nach Anspruch 1 oder 2, wobei das erste V2X-Kommunikationsmodul (110) ein erstes softwaredefiniertes Funkmodul ist und das zweite V2X-Kommunikationsmodul (120) ein zweites softwaredefiniertes Funkmodul ist.

4. Vorrichtung (100) nach Anspruch 1 oder 2, wobei das erste V2X-Kommunikationsmodul (110) ein erstes hardwaredefiniertes Funkmodul ist und das zweite V2X-Kommunikationsmodul (120) ein zweites hardwaredefiniertes Funkmodul ist.

5. Vorrichtung (100) nach einem der vorstehenden Ansprüche, wobei die Steuerung (130) konfiguriert ist, um basierend auf statischen Steuerinformationen, die das Land angeben, in dem das Fahrzeug betrieben wird, entweder das erste oder das zweite V2X-Kommunikationsmodul für die V2X-Kommunikation auszuwählen.

6. Vorrichtung (100) nach einem der vorstehenden Ansprüche, ferner umfassend einen programmierbaren Speicher (210),
wobei die Steuerung (130) konfiguriert ist, um das erste oder das zweite V2X-Kommunikationsmodul basierend auf einem vordefinierten Parameter auszuwählen, der in dem programmierbaren Speicher gespeichert ist, wobei der Parameter angibt, ob das erste oder das zweite V2X-Kommunikationsmodul ausgewählt werden soll.

7. Vorrichtung (100) nach Anspruch 6, wobei der vordefinierte Parameter einen Ländercode umfasst, wobei der Ländercode eine Verwendung entweder des ersten oder des zweiten V2X-Kommunikationsmoduls für die V2X-Kommunikation bestimmt.

8. Vorrichtung (100) nach einem der vorstehenden Ansprüche, wobei die Steuerung (130) konfiguriert ist, um basierend auf dynamischen Steuerinformationen, die das Land angeben, in dem das Fahrzeug betrieben wird, entweder das erste oder das zweite V2X-Kommunikationsmodul für die V2X-Kommunikation auszuwählen.

9. Vorrichtung (100) nach Anspruch 8, wobei die Steuerung (130) konfiguriert ist, um das erste oder das zweite V2X-Kommunikationsmodul basierend auf einer ausgewählten Benutzersprache für das Betreiben des Fahrzeugs auszuwählen.

10. Vorrichtung (100) nach einem der Ansprüche 8 oder 9, wobei die Steuerung (130) konfiguriert ist, um das erste oder das zweite V2X-Kommunikationsmodul basierend auf dem aktuellen Standort des Fahrzeugs auszuwählen.

11. Vorrichtung (100) nach Anspruch 10, wobei der aktuelle Standort des Fahrzeugs basierend auf einem satellitenbasierten Positionierungssystem (410) oder basierend auf Zellkennungen eines zellularen Kommunikationssystems bestimmt wird.

12. Vorrichtung (100) nach einem der vorstehenden Ansprüche, wobei die Steuerung (130) konfiguriert ist, um abwechselnd das erste und das zweite V2X-Kommunikationsmodul zu aktivieren und dasjenige V2X-Kommunikationsmodul für die V2X-Kommunikation auszuwählen, das gültige eingehende Nachrichten erfasst.

13. Vorrichtung (100) nach einem der vorstehenden Ansprüche, wobei das erste V2X-Kommunikationsmodul (110) konfiguriert ist, um die V2X-Kommunikation basierend auf IEEE 802.11p bereitzustellen, und wobei das zweite V2X-Kommunikationsmodul (120) konfiguriert ist, um die V2X-Kommunikation basierend auf einem zellularen 4G- oder 5G-Kommunikationssystem bereitzustellen.

14. Fahrzeug, umfassend die Vorrichtung (100) für drahtlose V2X-Kommunikation nach einem der vorstehenden Ansprüche.

15. Verfahren (600) für die drahtlose V2X-Kommunikation eines Fahrzeugs, das Verfahren umfassend das Bereitstellen (610) eines ersten V2X-Kommunikationsmoduls, das für die V2X-Kommunikation basierend auf einer ersten RAT konfiguriert ist;
Bereitstellen (620) eines zweiten V2X-Kommunikationsmoduls, das für die V2X-Kommunikation basierend auf einer zweiten RAT konfiguriert ist; und
Auswählen (630) entweder des ersten oder des zweiten V2X-Kommunikationsmoduls für die V2X-Kommunikation basierend auf einem bestimmten Land, in dem das Fahrzeug betrieben wird.

## Revendications

1. Appareil (100) pour la communication sans fil de véhicule à tout, V2X, d'un véhicule,
l'appareil comprenant
un premier module de communication V2X (110) configuré pour fournir une communication V2X basée sur une première technologie d'accès radio, RAT ;
un second module de communication V2X (120) configuré pour fournir une communication V2X basée sur une seconde RAT ; et
un dispositif de commande (130) configuré pour sélectionner soit le premier soit le second module de communication V2X pour une communication V2X en fonction d'un pays déterminé dans lequel le véhicule est utilisé.

2. Appareil (100) selon la revendication 1, dans lequel le premier module de communication V2X est configuré pour fournir une communication V2X basée sur WLAN, et dans lequel le second module de communication V2X est configuré pour fournir une communication V2X basée sur cellulaire.

3. Appareil (100) selon la revendication 1 ou 2, dans lequel le premier module de communication V2X (110) est un premier module radio défini par logiciel et le second module de communication V2X (120) est un second module radio défini par logiciel.

4. Appareil (100) selon la revendication 1 ou 2, dans lequel le premier module de communication V2X (110) est un premier module radio défini par matériel et le second module de communication V2X (120) est un second module radio défini par matériel.

5. Appareil (100) selon l'une quelconque des revendications précédentes, dans lequel le dispositif de commande (130) est configuré pour sélectionner soit le premier soit le second module de communication V2X pour une communication V2X sur la base d'informations de commande statique indiquant le pays dans lequel le véhicule est utilisé.

6. Appareil (100) selon l'une quelconque des revendications précédentes, comprenant en outre
une mémoire programmable (210),
dans lequel le dispositif de commande (130) est configuré pour sélectionner le premier ou le second module de communication V2X sur la base d'un paramètre prédéfini stocké dans la mémoire programmable, le paramètre indiquant s'il faut sélectionner le premier ou le second module de communication V2X.

7. Appareil (100) selon la revendication 6, dans lequel le paramètre prédéfini comprend un code de pays, dans lequel le code de pays détermine l'utilisation soit du premier soit du second module de communication V2X pour une communication V2X.

8. Appareil (100) selon l'une quelconque des revendications précédentes, dans lequel le dispositif de commande (130) est configuré pour sélectionner soit le premier soit le second module de communication V2X pour une communication V2X sur la base d'informations de commande dynamique indiquant le pays dans lequel le véhicule est utilisé.

9. Appareil (100) selon la revendication 8, dans lequel le dispositif de commande (130) est configuré pour sélectionner le premier ou le second module de communication V2X sur la base de la langue utilisateur sélectionnée pour l'utilisation du véhicule.

10. Appareil (100) selon l'une quelconque des revendications 8 ou 9, dans lequel le dispositif de commande (130) est configuré pour sélectionner le premier ou le second module de communication V2X sur la base de l'emplacement actuel du véhicule.

11. Appareil (100) selon la revendication 10, dans lequel l'emplacement actuel du véhicule est déterminé sur la base d'un système de positionnement par satellite (410) ou sur la base d'identifiants cellulaires d'un système de communication cellulaire.

12. Appareil (100) selon l'une quelconque des revendications précédentes, dans lequel le dispositif de commande (130) est configuré pour activer alternativement le premier et le second module de communication V2X et pour sélectionner le module de communication V2X pour une communication V2X qui détecte des messages entrants valides.

13. Appareil (100) selon l'une quelconque des revendications précédentes, dans lequel le premier module de communication V2X (110) est configuré pour fournir une communication V2X basée sur IEEE 802.11p, et dans lequel le second module de communication V2X (120) est configuré pour fournir une communication V2X basée sur un système de communication cellulaire 4G ou 5G.

14. Véhicule comprenant l'appareil (100) pour une communication V2X sans fil selon l'une quelconque des revendications précédentes.

15. Procédé (600) pour une communication V2X sans fil d'un véhicule, le procédé comprenant
la fourniture (610) d'un premier module de communication V2X configuré pour une communication V2X sur la base d'une première RAT ;
la fourniture (620) d'un second module de communication V2X configuré pour une communication V2X sur la base d'une seconde RAT ; et
la sélection (630) du premier ou du second module de communication V2X pour une communication V2X sur la base d'un pays déterminé dans lequel le véhicule est utilisé.
